# EUROPEAN PATENT APPLICATION

(11) **EP 1 288 886 A2**
(43) Date of publication of application: **05.03.2003**
(21) Application number: 02018273.9
(22) Date of filing: 22.08.2002
(51) Int. Cl.: G08G 1/0968, G01C 21/34

(54) **Route guidance system, method and program for automotive vehicle**

(30) Priority: 04.09.2001 JP 2001267044
(71) Applicant: NISSAN MOTOR COMPANY, LIMITED, Yokohama-shi, Kanagawa 221-0023 (JP)
(72) Inventor: Todoriki, Tsuyoshi, Ebina-shi, Kanagawa 243-0422 (JP)
(74) Representative: Grünecker, Kinkeldey, Stockmair & Schwanhäusser Anwaltssozietät

(57) **Abstract**

In route guidance system, method, and program for an automotive vehicle, an outgoing-route guidance data constituted by an outgoing-route producing information to produce an outgoing-route along which the vehicle is to travel from the present positional information of the vehicle detected by the detected vehicular position detecting section to the inputted destination information and an outgoing-route producing positional information representing a point of place at which the outgoing-route producing information is produced is converted into a returning-route guidance data constituted by a returning-route producing information and a returning-route producing positional information representing another point of place at which the returning-route producing information is produced, with a point of place indicated by the destination information as the start point of place of the returning-route and a point of place indicated by the present position detecting as the destination of the returning-route.

## Description

### BACKGROUND OF THE INVENTION:

### Field of the invention

The present invention relates to route guidance system, method, and program for an automotive vehicle in which a guidance route of an outgoing-route is produced to a viewer and the guidance route of a returning-route is produced to the viewer according to inputted and set start point of place of the outgoing-route and destination point of place thereof.

### Description of the related art

A Japanese Patent Application First Publication No. Heisei 7-134796 published on May 23, 1995 exemplifies a previously proposed route guidance system in which outgoing-route and returning-route are searched from the present position of a vehicle on which the route guidance system is mounted and an inputted destination at which the vehicle finally arrives when a vehicle driver performs a route search for the destination through a navigation system which produces a traveling route for a vehicle driver and which guides the traveling route. When, in the above-described previously proposed route guidance system, the destination is inputted and set by the driver, the navigation system searches a guidance route of the outgoing-route from a start point of place to a destination and searches automatically the guidance route of the returning route with the inputted and set destination as the start point of place and the present position of the vehicle as the destination. The search guidance route of the returning route is stored in a memory. If a request to display the guidance of the returning-route occurs, the guidance of the returning-route is displayed through a display image screen.

### SUMMARY OF THE INVENTION:

However, in the previously proposed route guidance system described above, two guidance route searches of the outgoing-route using the inputted and set destination and of the returning-route with the inputted and set destination as a start point of place and with the start point of place as the destination need to be separately carried out so that a load imposed on calculation on searching of the guidance route in the navigation system becomes accordingly large.

It is, hence, an object of the present invention to provide route guidance system, method, and program for an automotive vehicle in which the load on the calculation in a route search processing can be reduced by converting the inputted and set guidance route on the searched outgoing-route into the guidance route of the returning-route.

According to a first aspect of the present invention, there is provided a route guidance system for an automotive vehicle, comprising: a vehicular position detecting section that detects a present positional information of the vehicle; a destination input section through which a destination information is inputted; a guidance data converting section that converts an outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced into a returning-route guidance data constituted by a returning-route producing information and a returning-route producing positional information representing another point of place at which the returning-route producing information is produced, with a point of place indicated by the destination information as the start point of place of the returning-route and a point of place indicated by the present positional information as the destination of the returning-route; and a producing section that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

According to a second aspect of the present invention, there is provided route guidance program for an automotive vehicle, comprising: a vehicular position detecting function having a function to detect a present positional information of the vehicle; a destination input function through which a destination information is inputted; a guidance data converting function having a function to convert an outgoing-route guidance data constituted by an outgoing-route producing information to produce an outgoing-route along which the vehicle is to travel from the present positional information of the vehicle to the destination information inputted through the destination input function and an outgoing-route producing positional information representing a point of place at which the outgoing-route producing information is produced into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and a producing function having a function to compare at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

According to a third aspect of the present invention, there is provided a route guidance system for an automotive vehicle, comprising: a guidance route search section that receives a present positional information representing a present position of the vehicle and a destination information representing a destination to which the vehicle is finally to reach and generates an outgoing-route guidance data on the basis of the received present positional information and destination information, the guidance route search section being installed on a location outside of the vehicle and being connected to a vehicular route guidance apparatus installed on the vehicle via a communications line, the vehicular route guidance system comprising: a vehicular position detecting section that detects the present positional information of the vehicle; a destination input section through which the destination information is inputted; a communications section that transmits the present positional information of the vehicle detected by the vehicular position detecting section and the destination information thereof inputted through the destination input section to the guidance route search section and receives the outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced from the guidance route search section; a guidance data converting section that converts the outgoing-route guidance data received by the communications section into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and a producing section that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

According to a fourth aspect of the present invention, there is provided a route guidance system for an automotive vehicle, comprising: a vehicular position detecting section that detects a present positional information of the vehicle; a destination input section through which a destination information is inputted; a guidance route search section that receives the present positional information representing a present position of the vehicle and a destination information representing a destination to which the vehicle is finally to reach and generates an outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced on the basis of the received present positional information and destination information; aguidance data converting section that converts the outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and a producing section that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

According to a fifth aspect of the present invention, there is provided a route guidance method for an automotive vehicle, comprising: detecting a present positional information of the vehicle; inputting a destination information; converting an outgoing-route guidance data constituted by an outgoing-route producing information to produce an outgoing-route along which the vehicle is to travel from the detected present positional information of the vehicle to the inputted destination information and an outgoing-route producing positional information representing a point of place at which the outgoing-route producing information is produced into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; comparing at least one of the outgoing-route producing positional information and the returning-route producing positional information with the detected present positional information of the vehicle; and producing at least one of the returning-route producing information and the outgoing-route producing information when a difference in distance representing a result of comparison between the compared positional information is equal to or shorter than a predetermined value.

According to a sixth aspect of the present invention, there is provided a route guidance method for an automotive vehicle, comprising: receiving a present positional information representing a present position of the vehicle and a destination information representing a destination to which the vehicle is finally to reach; generating an outgoing-route guidance data on the basis of the received present positional information and destination information; transmitting the detected present positional information of the vehicle and the inputted destination information thereof to generate the outgoing-route guidance data; receiving the outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced; converting the received outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; comparing at least one of the outgoing-route producing positional information and the returning-route producing positional information with the detected present positional information of the vehicle; and producing at least one of the returning-route producing information and the outgoing-route producing information when a difference in distance representing a result of comparison between the compared positional information is equal to or shorter than a predetermined value.

According to a seventh aspect of the present invention, there is provided a route guidance method for an automotive vehicle, comprising: detecting a present positional information of the vehicle; inputting a destination information; receiving the present positional information representing a present position of the vehicle and a destination information representing a destination to which the vehicle is finally to reach; generating an outgoing-route guidance data constituted by an outgoing-route producing information to produce an outgoing-route along which the vehicle is to travel from the detected present to produce the returning-route along which the vehicle is to travel to return from the destination to a start point of place information of the vehicle to the inputted destination information and an outgoing-route producing positional information representing a point of place at which the outgoing-route producing information is produced on the basis of the received present positional information and destination information; converting the outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; comparing at least one of the outgoing-route producing positional information and the returning-route producing positional information with the present positional information of the vehicle; and producing at least one of the returning-route producing information and the outgoing-route producing information when a difference in distance representing a result of comparison between the compared positional information is equal to or shorter than a predetermined value.

This summary of the invention does not necessarily describe all necessary features so that the invention may also be a sub-combination of these described features.

### BRIEF DESCRIPTION OF THE DRAWINGS:

Fig. 1 is a schematic block diagram of a vehicular rout guidance system in a first preferred embodiment according to the present invention.

Fig. 2 is a table of an example of a structure of an outgoing-route guidance data used in the vehicular route guidance system shown in Fig. 1.

Fig. 3 is a table of an example of a structure of a returning-route guidance data used in the vehicular route guidance system shown in Fig. 1.

Fig. 4 is an operational flowchart representing a procedure of an outgoing-route guidance process executed by the vehicular route guidance system in the first embodiment shown in Fig. 1.

Fig. 5 is an operational flowchart representing a procedure of a returning-route guidance process executed by the vehicular route guidance system in the first embodiment shown in Fig. 1.

Fig. 6 is an operational flowchart representing a procedure of a data conversion process when a data converting section generates the returning-route guidance data using the outgoing-route guidance data.

Fig. 7 is an explanatory view for explaining the returning-route guidance data obtained from the outgoing-route guidance data received via a communications section and as a result of a data converting procedure.

Fig. 8 is a table representing one example of the outgoing-route guidance data converted at a data converting process as shown in Fig. 7.

Fig. 9 is a table representing one example of the returning-route guidance data converted at the data converting process as shown in Fig. 7.

Fig. 10 is an operational flowchart representing a procedure of the outgoing-route guidance process of the vehicular route guidance system in a second preferred embodiment according to the present invention.

Fig. 11 is an operational flowchart representing a procedure of the returning-route guidance process of the vehicular route guidance system in the second preferred embodiment according to the present invention.

Fig. 12 is a schematic block diagram of the vehicular route guidance system as an alternative of the first embodiment shown in Fig. 1.

### DETAILED DESCRIPTION OF THE PREFERRED EMBODIMENTS:

Reference will hereinafter be made to the drawings in order to facilitate a better understanding of the present invention.

### [First Embodiment]

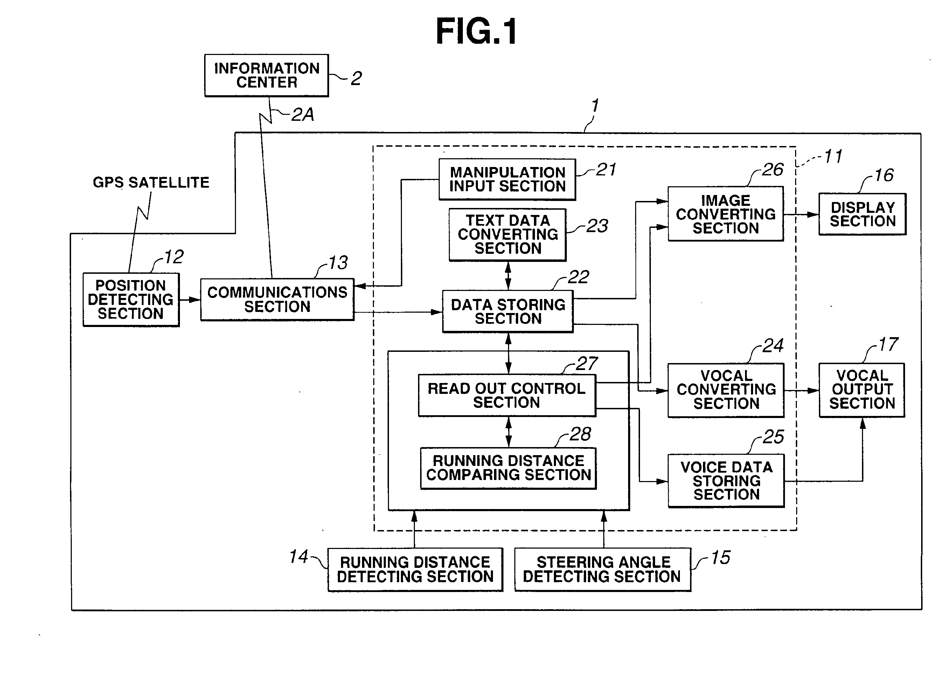

"Structure of a route guidance system for an automotive vehicle in a first preferred embodiment"
The present invention can be applied to a vehicular route guidance system in a first preferred embodiment whose structure is shown, for example, in Fig. 1. The vehicular route guidance system includes, as shown in Fig. 1, a vehicle 1 and an information center 2 communicable with vehicle 1. In the first embodiment, information center 2 is connected to vehicle 1 via a communications line 2A. Vehicle 1 includes: a navigation system 11 that performs various kinds of processes to produce a traveling route to a viewer such as a vehicle driver; a position detecting section 12 that receives electric waves of GPS (Global Positioning System) satellites; a communications section 13 that communicates with information center 2 in a wireless manner and connected to navigation system 11; a traveling distance detecting section 14 that detects a distance that vehicle 1 has traveled and generates a traveling distance information; a steering angle detecting section 15 that detects a vehicular steering angle of vehicle 1 and generates a steering angle information; a display section 16 that displays a vehicular running distance to produce various types of contents to the vehicle driver; and a vocal output section 17 that speaks each of various kinds of information and produces various kinds of information. Position detecting section 12 detects the position of the vehicle by referring to the electric waves of GPS satellites and outputs the (present) positional information to communications section 13 and navigation system 11.

Communications section 13 is communicable to information center 2 by carrying out wireless communication to information center 2, transmits vehicular positional information from position detecting section 12, and transmits a transmission request on an outgoing-route guidance data indicating the guidance route from the present position of the vehicle (start point of place) to the destination.

Communications section 13 receives the outgoing-route guidance data from information center 2 according to the transmission request and outputs the received outgoing-route guidance data to navigation system 11. At this time, communications section 13 inputs the outgoing-route guidance data as a text data of a text format to navigation system 11. The outgoing-route guidance data is constituted by an outgoing-route producing information (speaking text data) to be produced for the vehicle driver to be guided.

Traveling distance calculating section 14 is connected to a vehicular velocity sensor of vehicle 1, calculates a traveling distance of vehicle 1, and outputs the calculated traveling distance information to navigation system 11. In addition, a steering angle detecting section 15 is connected to a vehicular steering angle sensor, detects a steering angular displacement of a vehicular steering wheel, and outputs the detected steering angular information to navigation system 11. Information center 2 generates outgoing-route guidance data representing the outgoing-route guidance route on the basis of the positional information of the vehicle and the destination information from communication unit 13. The outgoing-route guidance data generated by information center 2 is a text data for the outgoing-route guidance to be produced to the driver.

Navigation system 11 includes: a manipulation input section (corresponding to a destination input section) 21 which is enabled to be manipulated by the driver; a data storing section 22; a text data converting section 23, a vocal converting section 24, a vocal data storing section 25, an image converting section 26, a read out control section 27, and a traveling (running) distance comparing section 28.

Manipulation input section 21 comprises, for example, a button mechanism and a dial mechanism. A vehicular occupant manipulates manipulation input section 21 to generate a manipulation input signal to communications section 13. Manipulation input section 21 generates the manipulation input signal representing the destination of vehicle 1 by manually specifying the destination of vehicle. Thus, communications section 13 can transmit the destination information representing the destination of vehicle 1 to information center 2 together with the positional information of vehicle 1. Data storing section 22 is constituted by a memory and stores the outgoing-route guidance data in the text format received by communications section 13.

Text data converting section 23 reads the outgoing-route guidance data which are text data from data storing section 22, performs a data conversion in accordance with a predetermined rule to generate a returning-route guidance data, the generated returning-route guidance data being stored in data storage section 22. It is noted that the details of the data conversion process by means of text data converting section 23 will be described later.

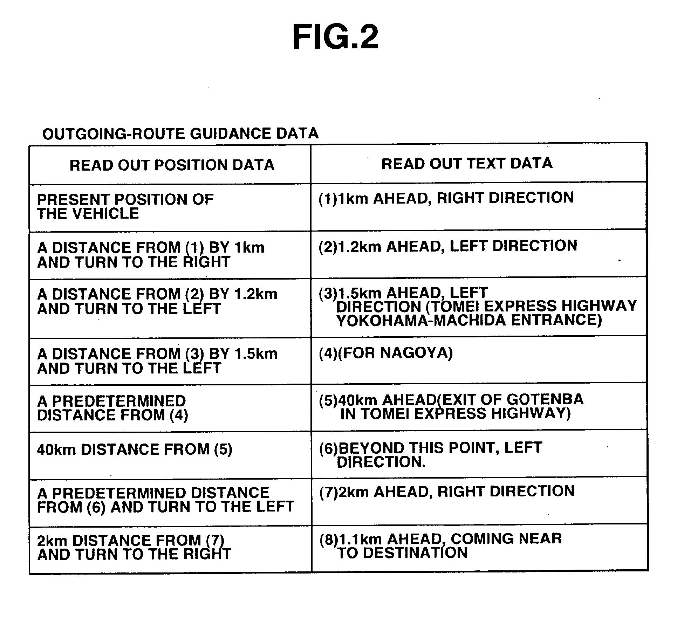

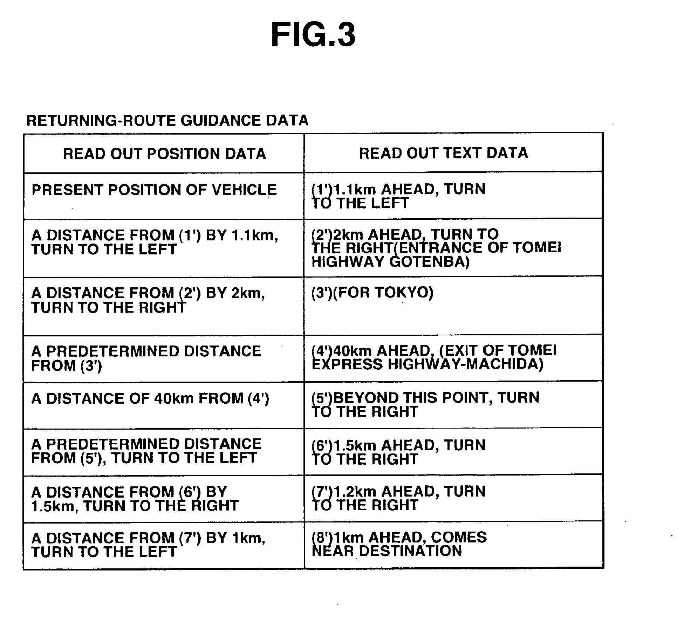

Text data converting section 23 converts the outgoing-route guidance data shown in Fig. 2 into the returning-route guidance data shown in Fig. 3. The outgoing-route guidance data and the returning-route guidance data are constituted by a speak out text data spoken by vocal output section 17.

The outgoing-route guidance data and the returning-route guidance data will be described below with reference to tables of Figs. 2 and 3, respectively.

The outgoing-route guidance data are such that " turn to right at a position 1 km ahead (right direction) " is announced by referring to a read out text data (1) at the present position of the vehicle at which the vehicle is to start and, immediately after the read out of read out text data (1), vehicle 1 travels through the distance of 1 Km and steered vehicle 1 to turn toward a rightward direction at a point of place 1 km ahead of the present position. Then, at a rightward steered position, the next read out text data (2) is announced.

Read out control section 21 controls vocal converting section 24 and image converting section 26 to read out a predetermined text data (outgoing-route guidance data or returning-route guidance data) from a data storing section 22 on the basis of a travel distance information from travel distance detecting section 14 and a steering angle detecting information from steering angle detecting section 24.

Vocal converting section 24 reads a predetermined text data from data storing section 22, converts the predetermined text data into a vocal signal, and outputs the vocal signal to a vocal output section 17. Vocal output section 17 is provided with a vocal announcing mechanism such as a speaker to produce the guidance route to the vehicle driver (occupant) using the inputted vocal signal.

Image converting section 26 reads the predetermined text data from data storing section 22 and converts the text data into an image signal, the image signal being outputted to a display section 16. Display section 16 is provided with a liquid crystal display mechanism and produces the guidance route to the viewer using the inputted image signal.

In addition, travel distance comparing section 28 calculates a difference in distance between distance data and directional data (right turn or left turn) included in the text data of data storing section 22 and detection results in travel distance detecting section 14 and steering angle detecting section 15 and outputs an information to an effect that the difference in distance described above is equal to or shorter than a preset value (or predetermined value) to vocal converting section 24 and image converting section 26 when the difference in distance becomes equal to or shorter than the preset value.

Vocal data converting section 24 reads the route guidance information to be produced to the vehicle driver in a vocal form by vocal output section 17 from data storing section 22 in accordance with the command issued from read out control section 27 and outputs the route guidance information to vocal output section 17. Thus, vocal output section 17 produces the content of the route guidance information to the vehicle driver in the vocal form at a predetermined traveling point of place.

Image data converting section 26 reads the route guidance information to be produced to the vehicle driver in the vocal form by display section 16 from data storing section 22 in accordance with the information from read out control section 27, the read information being outputted to display section 16. Thus, display section 16 serves to produce the content of the route guidance information to the driver in a form of an image at the predetermined traveling point of place.

### [Outgoing-route Guidance Processing]

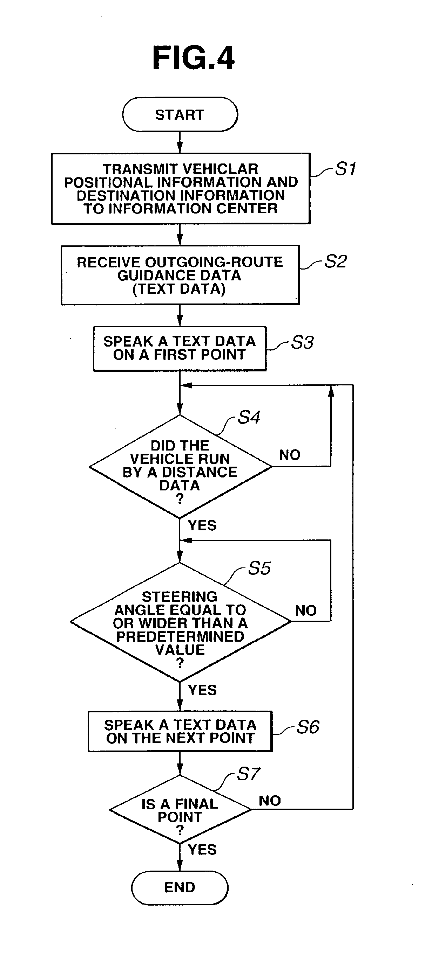

Fig. 4 shows a flowchart on the outgoing-route guidance processing by means of the above-described vehicular route guidance system in the first embodiment according to the present invention.

As shown in Fig. 4, a route guidance system starts a process at a step S1 to request the outgoing-route guidance in response to a specification of a destination to which the vehicle is desired to reach through a manipulation of manipulation input section 21. Then, in addition to the generation of the destination information, the route guidance system detects longitude and latitude indicating the position of vehicle 1 from position detecting section 12 and outputs the vehicular positional information and the destination information to communications section 13. Communications section 13 transmits the vehicular positional information and the destination information to information center 2 and the routine goes to a step S2. Thus, route guidance system issues a transmission request to transmit the route guidance data to information center 2.

In this response, information center 2 carries out a route search based on positional information of vehicle 1 and destination information so as to generate the outgoing-route guidance data. Communications section 13 of vehicle 1 receives wirelessly the outgoing-route guidance data from information center 2 in the text format. The received data is stored in data storing section 22 and the process is advanced to a step S3.

At this time, information center 2 excludes one-way roads from the returning route and uses a search condition such that a right-turn inhibit intersection is not used to carry out the route search in order to permit the road used during the outgoing-route guidance data to be used during the returning-route route search.

At step S3, outgoing-route guidance data received at step S2 is produced to the vehicle driver. When vehicle 1 is traveling, read out control section 27 inputs, at any time, a steering angular displacement detection information. Vehicular route guidance system determines a read-out position and timing of the text data on the basis of the inputted steering angle information and issues a command to vocal converting section 24. Thus, vocal converting section 24 reads the text data accumulated into data storing section 22 by means of vocal converting section 24, converts the text data into the vocal data, and outputs the converted vocal data to vocal output section 17. The read out of the text data is executed at a first point of place for the time duration for which vehicle 1 is traveling in accordance with the outgoing-route guidance data. Then, the routine goes to a step S4.

A timing at which the text data is read out in the vocal form (spoken) at the first point, at step S3, is as follows: That is to say, for example, the fact that vehicle 1 has turned at a traffic intersection is detected by a steering angle detection information and a time point immediately after vehicle 1 has turned at the traffic intersection is determined to be the position and timing at which the text data is read out (spoken). Then, a vocal production that "left direction, 2.5 Km ahead " is carried out and the guidance at the next point of place is carried out. By repeating such vocal producing process as described above, the route guidance of the outgoing-route is produced to the vehicle driver. The vehicle driver can drive vehicle 1 to reach to the destination along the produced outgoing-route guidance data.

At a step S4, travel distance comparing section 28 compares travel distance information from travel distance detecting section 14 with distance data included in the returning-route guidance data to determine if vehicle 1 has traveled a predetermined distance data up to the next point indicated by the returning-route guidance data. If the distance difference is equal to or shorter than a predetermined value, read out control section 27 issues a command to output vocal data from vocal data converting section 24 to vocal output section 17. In accordance with this command, the vocal data stored by data storing section 22 is read out and is outputted to vocal output section 17.

In addition, at step S4, travel distance detecting section 14 measures the distance of travel from a time point at which vehicle 1 has traveled at the intersection at step S3. Then, suppose, for example, that the distance from the intersection to the next point of place at which the vocal read out is carried out is 2.5 Km, the preset value of the difference in distance is 100 meters. Then, at a time point at which the travel distance information from travel distance detecting section 14 is 2. 4 Km, the vocal data such as " a traffic intersection is present 100 meter ahead " may be read out from vocal data accumulating section 25 and may be outputted to vocal output section 17.

At the next step S5, on the basis of the steering angle detection information from steering angle detecting section 15, route guidance system determines if vehicle 1 has turned at the intersection specified at step S4. If vehicle 1 has turned, the routine goes to a step S6. At step S6, the text data of the next point in the same manner as step S3 is read out in the vocal form. At the next step S7, such a series of processes from steps S4 to S6 are repeated until vehicle 1 is determined to have been reached to a final point and if the vocal read out of the final point to reach to the destination is carried out, the whole processing is ended.

### [Returning-route guidance process]

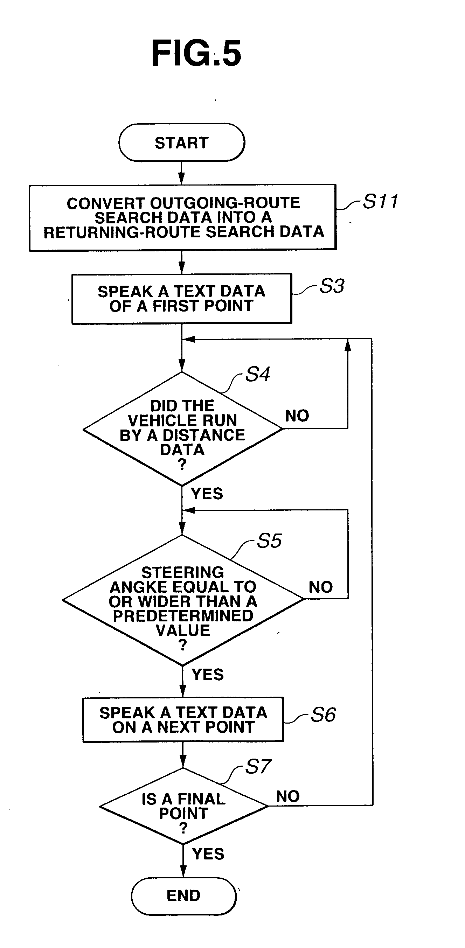

Fig. 5 shows an operational flowchart of the returning-route guidance process by means of the vehicular route guidance system described above. It is noted that, for the same processing as the outgoing-route guidance process shown in Fig. 4, the same step numbers as those shown in Fig. 4 are attached and the detailed description thereof will be omitted herein.

In this returning-route guidance process, when the route guidance request of the returning-route is present with manipulation input section 21 manipulated at step S11, the destination during the outgoing-route is set to a point of start of the returning-route and the point of start during the outgoing-route is set to the destination. Then, the outgoing-route guidance data received at step S2 is converted to obtain the returning-route guidance data. This is a difference point from the above-described outgoing-route guidance data.

At a step S11, manipulation input section 21 is manipulated and a request for the route guidance of the returning-route is inputted. At this time, the outgoing-route guidance data are read from data storing section 22 by means of text data converting section 23 and a data conversion process in accordance with a preset rule to prepare (generate) the returning-route guidance data. When the generated returning-route guidance data is stored into data storing section 22, memory addresses therefore are different from the outgoing-route guidance data. If the series of processes from steps S3 to S7 are carried out, the route guidance is carried out for vehicle 1 to travel along the returning-route.

### "Data conversion process"

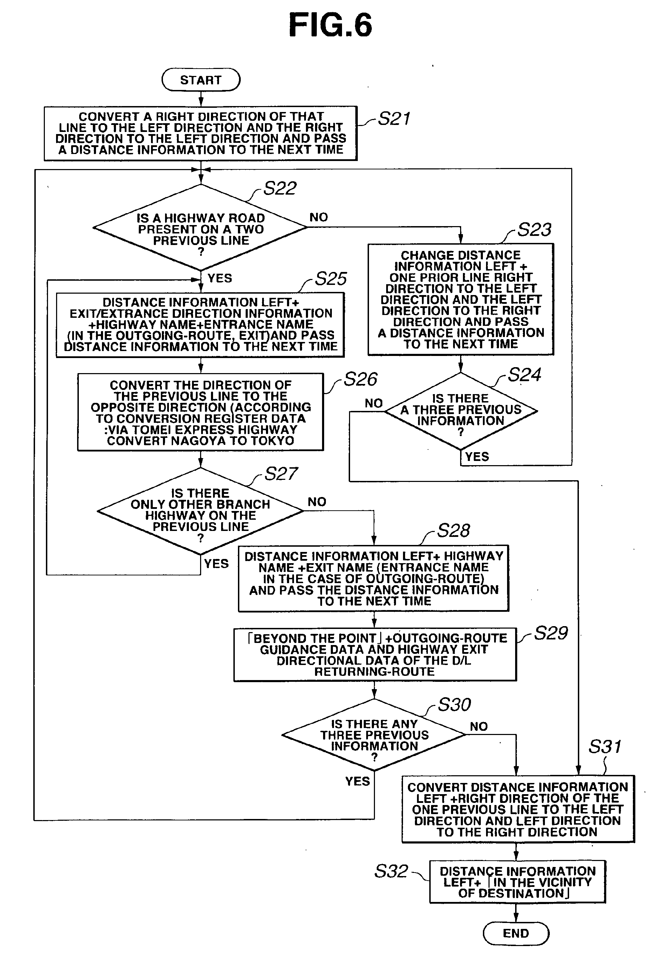

Fig. 6 shows a flowchart for a data conversion process carried out at step S11 by means of text data conversion section 23. In the example shown in Fig. 6, a point of place A is specified as a point of start on the outgoing-route, a point of place J is specified as the destination, and the outgoing-route guidance data to guide vehicle 1 along the outgoing-route is received at communications section 13. At this time, the returning-route guidance data is developed at text data converting section 23 with point of place J as the start point of place and point of place A as the destination. One example of the development of the returning-route guidance data will be described below.

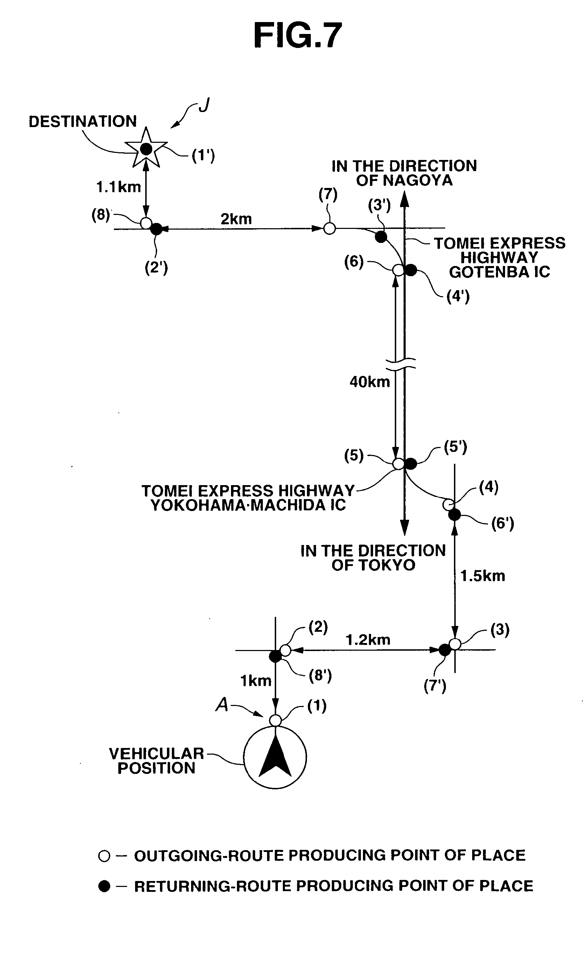

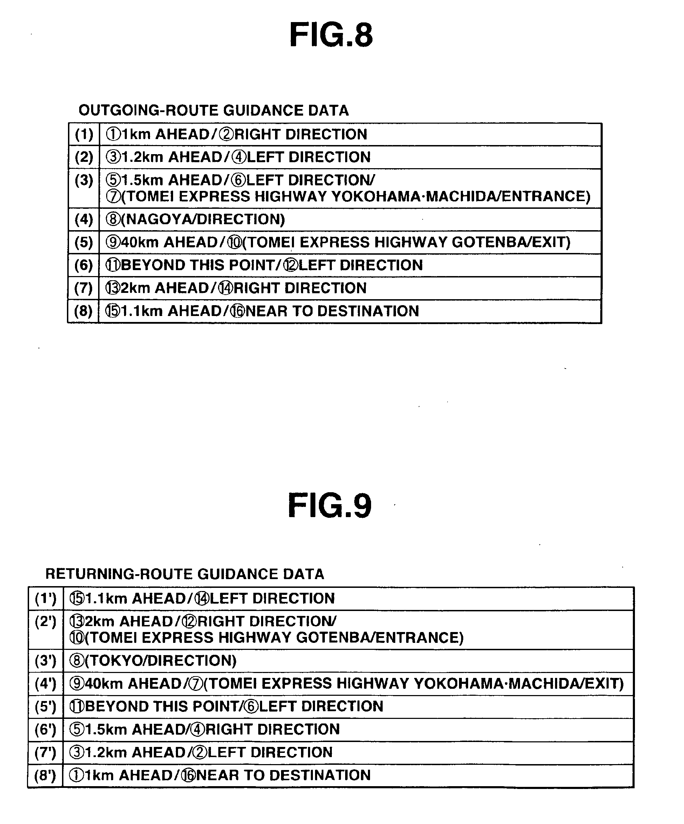

The outgoing-route guidance data is constituted by the data including the read out text data as shown in a table of Fig. 8. That is to say, outgoing-route guidance data commands to read out the read out text data of (1) to (8) shown in the table of Fig. 8 at each point of place described in (1) through (8) shown in Fig. 7.

Then, when the data conversion process by means of text data converting section 23 as will be described later is carried out, the returning-route guidance data which are read as the text data (1') through (8') at points of places (1') through (8') shown in Fig. 7, as appreciated from a table of Fig. 9, are generated through the data conversion executed by means of text data converting section 23.

At this time, text data converting section 23 converts outgoing-route guidance data into the returning-route guidance data in accordance with the predetermined rule described above. It is noted that the predetermined rule is listed below. That is to say, (1) " Right direction " recited in the outgoing-route guidance data is converted to " left direction " in the case of the returning-route guidance data; (2) " Exit of a freeway" recited in the outgoing-route guidance data is converted into " entrance of the freeway " in the returning-route guidance data; (3) " OO direction on a freeway " recited in the outgoing-route guidance data is converted into " xx direction on the freeway " in the returning-route guidance data; and (4) road name and distance of the outgoing-route guidance data are directly used in those of the returning-route guidance data.

In addition, for entrances and exits of freeways (express highway), directions of entrances and exits in the returning-route corresponding to entrances and exits in the outgoing-route may be symbolized during the route search for the outgoing-route guidance data and may be rewritten onto the data. It is noted that no limitation is placed on the above-described rules of (1) through (4) and any other rules may be added or applied.

Referring to Fig. 6, at a step S21, text data converting section 23 reads the outgoing-route guidance data from data storing section 22. Then, first, a description of " right direction " of the read out text data constituting the returning-route guidance data is converted into " left direction " and that on " left direction" is converted into that on " right direction " and the routine goes to a step S22.

At step S22, text data converting section 23 determines whether the description on " express highway " is present on a two (second) previous line from the read text data of the outgoing-route guidance data to which an attention is paid. If present (Yes), the routine goes to a step S25. If not present (No), the routine goes to a step S22. At step S23, data converting section 23 executes the process of the distance information left, the description of " right direction " on one previous line from the read out text data described at step S21 is converted into the description of " left direction " and the description of " left direction " thereon is converted into that on " right direction ". Specifically, the distance information of read out text data (8) on line 8, viz., 1. 1 Km ahead and the description of " right direction " of read out text data (7) is converted into " left direction " to generate read out text data (1').

At step S24, text data converting section 23 determines whether the road text data three previous line from the read out text data recited in a line to which the attention is paid is present. If present (Yes) at step S24, the routine returns to step S22. If not present (No) at step S24, the routine jumps to a step S30.

At a step S25, text data converting section 23 generates the read out text data on the returning-route guidance data constituted by the distance information left as the read out text data of the outgoing-route guidance data, the information on entrance and exit directions of the freeway present on the two previous line, the name of the freeway, and the name of the freeway. Then, the routine goes to a step S26. Specifically, the content of step S25 is processed so that " Tomei Express Highway (Freeway) Gotenba/Exit " of the read out text data (5) is converted into " Tomei Express Highway (Freeway) Gotenba/ entrance " recited in the read out text data (2').

At step S26, the read out text data is generated with the description on the express highway direction recited in one previous line from the description of " Express highway " searched at step S22 converted into the description on the reversed direction and the routine goes to a step S27. Specifically, the description of " Nagoya/direction " on the read out text data (4) on the outgoing-route guidance data is converted into the description of " Tokyo/direction " on the read out text data (3') of the returning-route guidance data.

At step S27, data converting section 23 determines whether another express highway (branched express highway) is present in the read out text data recited in the previous line from the description of " express highway " . If present (Yes) at step S27, the routine returns to step S25 to repeat the series of processes at steps S25 and S26. If not present (No) at step S27, the routine goes to a step S28.

At step S28, data converting section 23 generates the read out text data of the returning-route guidance data constituted by the distance information left as the read out text data of the outgoing-route guidance data, the information in the entrance and exit directions of the express highway present on one previous line, the name of express highway, and exit name thereof and the present routine goes to a step S29. Specifically, data converting section 23 converts " Tomei (or Toumei) Express Highway (Freeway), Gotenba/exit (Tomei Kousokudoro, Gotennba/deguchi)" of the read out text data (5) into " Tomei (or Toumei) Express Highway Gotenba/entrace (Tomei Kousokudoro, Gotenba/Iriguchi) " in the read out text data (2').

At step S29, the read out text data (4') is generated from the description of " beyond this point (Konosaki) " recited in the read out text data (6) of the outgoing-route guidance data and the exit direction of the express highway. Then, the routine goes to a step S30. At step S30, data converting section 23 determines whether the text data three previous line are present as viewed from the read out text data of the outgoing-route guidance data to which the attention has been paid. If present (Yes) at step S30, the routine goes to step S22. If not present (No) at step S30, the routine goes to step S31.

At step S31, data converting section 23 converts the description of " right direction " included in the read out text data recited in one previous line into that of " left direction " and vice versa with the distance information left converted into the distance information on the returning-route guidance data. Thereafter, the routine goes to a step S32.

At step S32, data converting section 23 generates the read out text data on the returning-route guidance data constituted by the distance information left and the returning-route guidance data constituted by the description of " near (in the vicinity to) the destination " and the present routine is ended. Consequently, the outgoing-route guidance data such as shown in the table of Fig. 8 is converted into the returning-route guidance data such as shown in the table of Fig. 9. At a point of place at which the returning-route is produced as shown in Fig. 7, the returning-route guidance data on the basis of which the vocal signal is produced and outputted is generated.

### [Advantage of vehicular route guidance system in the first embodiment according to the present invention]

As described hereinabove, in the vehicular route guidance system in the first embodiment according to the present invention, text data converting section 23 executes the series of processes shown in Fig. 6 on the basis of the outgoing-route guidance data retrieved from information center 2. Thus, it is not necessary for information center 2 to generate the returning-route guidance data. The returning-route guidance data can be generated only by retrieving the outgoing-route guidance data inputted, set, and searched through navigation system 11. Consequently, the calculation load applied to information center 2 can be reduced.

In addition, as compared with any other vehicular route guidance system than that in the first embodiment, the calculation load requiring navigation system 11 to calculate the returning-route can be reduced and the processing time can accordingly be reduced.

Furthermore, according to the vehicular route guidance system, the same road as that indicated by the outgoing-route guidance data is used during the generation of the returning-route guidance data. Therefore, the returning-route guidance data can be generated in such a manner that vehicle 1 passes the roads which are remembered by the vehicle driver during the travel of vehicle on the returning-route. Consequently, the roads on the returning-route can be traveled with no anxiety about missing the route to reach to the destination. Furthermore, when the returning-route guidance data are generated, any road which is prohibited from passing such as a one-way road can be excluded.

In addition, in the vehicular route guidance system according to the present invention, the outgoing-route guidance data is transmitted from information center 2 to vehicle 1 as the text data and the data handled by text data converting section 23 and vocal converting section 24 is the text data. Hence, a communication load on both of information center 2 and navigation system 11 and a processing load thereon can considerably be reduced.

Still furthermore, in the vehicular route guidance system in the first embodiment according to the present invention, text data converting section 23 converts the outgoing-route guidance data into the returning-route guidance data in accordance with the predetermined rule. Hence, a simple sorting process on the text data permits the generation of the returning-route guidance data.

As compared with a new search process for the returning-route guidance data, the processing load required to obtain the returning route guidance data can be reduced and the processing time can be shortened.

### [Second Embodiment]

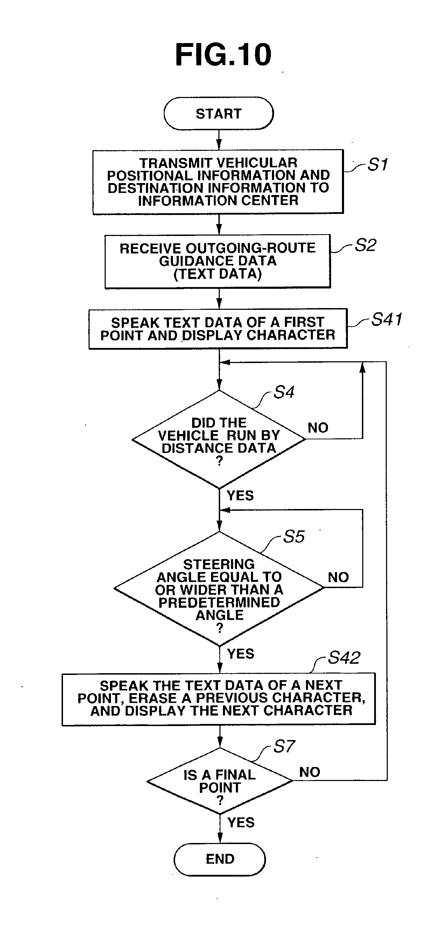

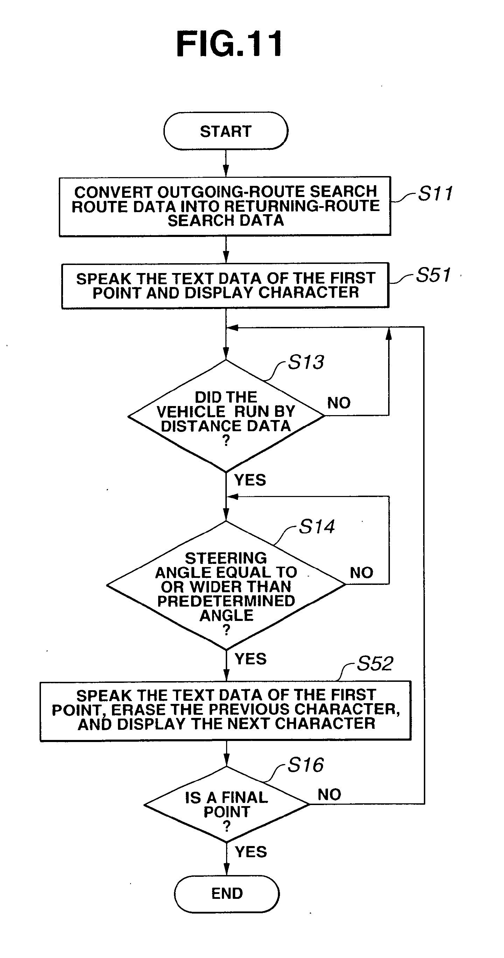

Figs. 10 and 11 show flowcharts representing processing procedures executed by the vehicular route guidance system in a second preferred embodiment according to the present invention. It is noted that the same reference numerals as those described in the first embodiment designate corresponding elements described in the first embodiment and the detailed explanation thereof will be omitted herein.

As appreciated from Fig. 10, at a step S41 after step S2, vocal output section 17 outputs the text data of the outgoing-route guidance data stored in data storing section 22 in the vocal form and executes a character display through display section 16 installed on a position at which the vehicle driver can visually be recognized. Then, the routine shown in Fig. 10 goes to step S4. On the other hand, at a step S42 after step S5, the text data at the next point is outputted in the vocal form by vocal output section 17. At this time, with the content of the character display erased from the image screen, the character display having the same content as that of the vocal output is carried out.

As appreciated from Fig. 11, at a step S51 after step S11, vocal output section 17 outputs the text data of the returning-route guidance data stored in data storing section 22. At this time, with the content of the character display erased from the image screen, the content of character display erased from the image screen, the character display having the same content as that of the vocal output is carried out through display section 16. Thereafter, the routine goes to step S7.

At a step S52 after step S14, vocal output section 17 outputs the text data on the next point in the vocal form and, with the content of the character display carried out at the previous step erased from the image screen of display section 16, the character display having the same content as that of the vocal output is carried out through display section 16.

According to the vehicular route guidance system in the second embodiment, the text data is read out (spoken) by vocal output section 17 in the same manner as the first embodiment to produce the route along which vehicle 1 is to travel and the character display is carried out through display section 15 using the text data. Hence, even if vehicle driver does not listen to the vocal production, the traveling route can visually be produced.

While the present invention has been particularly shown and described with reference to the first and second preferred embodiments thereof, it will be understood by those skilled in the art that the foregoing and other changes in form and details can be made therein without departing from the sprit and scope of the present invention.

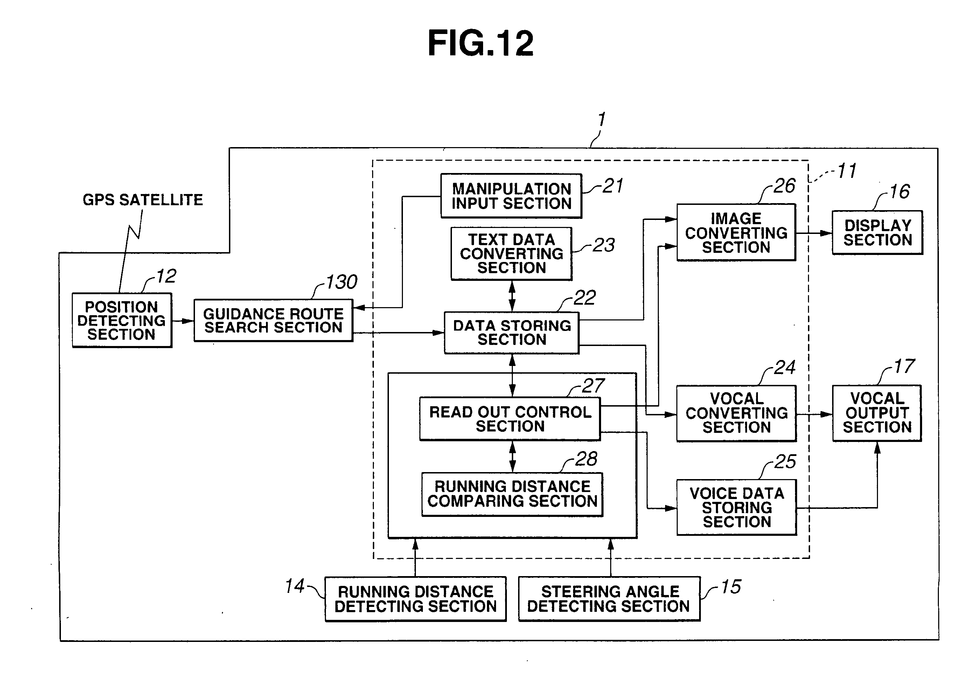

As described above, the vehicular route guidance system has been explained in which text data converting section 23 at vehicle side executes such a process that the outgoing-route guidance data is converted into the returning-route guidance data. This data conversion process may be carried out at information center 2 and the outgoing-route guidance data and the returning-route guidance data may be transmitted to vehicle 1. In either case, the conversion of text data may only be carried out in the predetermined rule at information center 2 and a processing burden imposed on navigation system 11 can be reduced as compared with a case in which the returning route is newly searched. In addition, it is not necessary to have text data converting section 23 on vehicle side 1. A cost of constructing navigation system 11 can be reduced. In addition, in this alternative case, it is not necessary to have text data converting section 23 at vehicle side 1. The cost of constructing navigation system 11 can, hence, be reduced. A case wherein the outgoing-route guidance data is used in information center 2 has been described. However, it is not necessary to perform communications between information center 2 and vehicle 1 and communications section 13 can be omitted from vehicle 1. In this case, a guidance route searching section 130 may be installed in navigation system 11 as described in Fig. 12, in place of communications section 13. Thus, the cost of constructing navigation system 11 can be reduced.

Although, with the outgoing-route guidance data and the returning-route guidance data and the text data, a producing position information is simultaneously obtained from the production of, for example, " 2 Km ahead, right direction ". The producing position information relates to a position of the vehicle at which the route is produced next, for example, when vehicle 1 has traveled 2 Km and has turned right. Together with the producing information, longitude and latitude of the position produced as the producing position information may be used. As the producing position information, longitude and latitude may be used. It is not necessary to use the steering angle detection information by means of steering angular displacement detecting section 15 and traveling distance information by means of traveling distance detecting section 14. The cost of constructing navigation system 11 at vehicle side 1 can be reduced.

Furthermore, although the content displayed on display section 16 in the second embodiment corresponds to the next point portion (one line portion), the further subsequent point may be displayed together with the next point. In this case, it is recommended that a character size and color from those of the further subsequent point may be varied. Thus, the further subsequent route may be produced to the driver and the route may be produced with the driver driven with a margin.

Furthermore, in the above-described embodiments, information center 2 is at a web site on the internet and the outgoing-route guidance data is replied to vehicle 1 in response to the request from vehicle 1. With information site (information center) 2 as a portal site in which a manned or unmanned vocal interactive system has been adopted, data communications may reply the outgoing-route guidance data to a request issued from vehicle 1 via the voice and data communications. In the above-described first and second embodiments, a case where the distance to the next point and direction are produced to the vehicle driver when the route guidance is carried out has been described. However, any further other information may be produced. For example, in addition to the distance and direction to be traveled, for example, " 2. 5 Km ahead, national road No. 16, right direction " may be produced. Consequently, a production of the route to be traveled can clearly be carried out.

The entire contents of a Japanese Patent Application No. 2001-267044 (filed in Japan on September 4, 2001) are herein incorporated by reference. The scope of the invention is defined with reference to the following claims.

## Claims

1. A route guidance system for an automotive vehicle (1), comprising:
a vehicular position detecting section (12) that detects a present positional information of the vehicle;
a destination input section (21) through which a destination information is inputted;
a guidance data converting section (22, 23) that converts an outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced into a returning-route guidance data constituted by a returning-route producing information and a returning-route producing positional information representing another point of place at which the returning-route producing information is produced, with a point of place indicated by the destination information as the start point of place of the returning-route and a point of place indicated by the present positional information as the destination of the returning-route; and
a producing section (24, 25, 26, 27, 28, 16, 17) that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

2. A route guidance system for an automotive vehicle as claimed in claim 1, wherein the route guidance system further comprises a guidance route search section (2, 13, 130) that receives the present positional information representing the present position of the vehicle and the destination information representing a destination to which the vehicle is finally to reach and generates the outgoing-route guidance data on the basis of the received present positional information and destination information.

3. A route guidance system for an automotive vehicle as claimed in claim 2, wherein the guidance route search section (2) is installed on a location outside the vehicle and is connected to a vehicular route guidance apparatus installed on the vehicle and comprising the vehicular position detecting section, the destination input section, the guidance data converting section, and the producing section via a communications line (2A) and wherein the guidance route search section transmits the outgoing-route guidance data to the vehicular route guidance apparatus.

4. A route guidance system for an automotive vehicle as claimed in claim 2, wherein the vehicular route guidance search section comprises a communications section (13) that transmits the present positional information detected by the present position detecting section and the destination information inputted by the destination input section to the guidance route search section and receives the outgoing-route guidance data from the guidance route search section.

5. A route guidance system for an automotive vehicle as claimed in any one of the preceding claims 2 through 4, wherein the guidance route search section (2, 13, 130) searches the outgoing-route guidance data constituted by roads which are enabled for the vehicle to pass through and are enabled to constitute the returning-route.

6. A route guidance system for an automotive vehicle as claimed in any one of the preceding claims 1 through 5, wherein the outgoing-route guidance data are text data.

7. A route guidance system for an automotive vehicle as claimed in any one of the preceding claims 1 through 6, wherein the data converting section (22, 23)converts a description of a right direction included in the outgoing-route guidance data into that of a left direction, converts the description of the left direction included therein into that of the right direction, converts the description of an entrance included therein into that of an exit, and converts the description of the exit included therein into that of the entrance to generate the returning-route guidance data.

8. A route guidance system for an automotive vehicle as claimed in claim 2, wherein the guidance route search section (130) is installed in the vehicle.

9. A route guidance system as claimed in any one of the preceding claims 6 through 8, wherein the producing section comprises a vocal output section (17) that outputs the text data in a vocal form and an image display section (16) that displays the text data in a character form on an image screen thereof.

10. A route guidance program for an automotive vehicle (1), comprising:
a vehicular position detecting function (12) having a function to detect a present positional information of the vehicle;
a destination input function (21) through which a destination information is inputted;
a guidance data converting function (22, 23) having a function to convert an outgoing-route guidance data constituted by an outgoing-route producing information to produce an outgoing-route along which the vehicle is to travel from the present positional information of the vehicle to the destination information inputted through the destination input function and an outgoing-route producing positional information representing a point of place at which the outgoing-route producing information is produced into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and
a producing function (24, 25, 26, 27, 28, 16, 17) having a function to compare at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

11. A route guidance program for an automotive vehicle as claimed in claim 10, wherein the route guidance program further comprises a guidance route search function (2, 13, 130) having a function to receive the present positional information representing the present position of the vehicle and the destination information representing a destination to which the vehicle is finally to reach and generate the outgoing-route guidance data on the basis of the received positional information and destination information.

12. A route guidance program for an automotive vehicle as claimed in claim 11, wherein the route guidance program further comprises a communications function (13) having a function to transmit the present positional information detected at the present position detecting function and the destination information inputted at the destination input function to an information center external to the vehicle and having the route guidance search function and receive the outgoing-route guidance data from the information center (2) having the route guidance search function.

13. A route guidance program for an automotive vehicle as claimed in either claim 11 or claim 12, wherein the route guidance search function (2, 13, 130) searches the outgoing-route guidance data constituted by roads which are enabled for the vehicle to pass through and are enabled to constitute the returning-route.

14. A route guidance program for an automotive vehicle as claimed in any one of the preceding claims 10 through 13, wherein the outgoing-route guidance data are text data.

15. A route guidance program for an automotive vehicle as claimed in any one of the preceding claims 10 through 14, wherein the data converting section (22, 23) converts a description of a right direction included in the outgoing-route guidance data into that of a left direction, converts the description of the left direction included therein into that of the right direction, converts the description of an entrance included therein into that of an exit, and converts the description of the exit included therein into that of the entrance to generate the returning-route guidance data.

16. A route guidance system for an automotive vehicle (1), comprising:
a guidance route search section (2) that receives a present positional information representing a present position of the vehicle and a destination information representing a destination to which the vehicle is finally to reach and generates an outgoing-route guidance data on the basis of the received present positional information and destination information, the guidance route search section being installed on a location outside of the vehicle (1) and being connected to a vehicular route guidance apparatus installed on the vehicle via a communications line (2A), the vehicular route guidance system comprising:
a vehicular position detecting section (12) that detects the present positional information of the vehicle;
a destination input section (21) through which the destination information is inputted;
a communications section (13) that transmits the present positional information of the vehicle detected by the vehicular position detecting section and the destination information thereof inputted through the destination input section to the guidance route search section and receives the outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced from the guidance route search section;
a guidance data converting section (22, 23) that converts the outgoing-route guidance data received by the communications section into areturning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and
a producing section (24, 25, 26, 27, 28, 16, 17) that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

17. A route guidance system for an automotive vehicle (1), comprising:
a vehicular position detecting section (12) that detects a present positional information of the vehicle;
a destination input section (21) through which a destination information is inputted;
a guidance route search section (130) that receives the present positional information representing a present position of the vehicle and a destination information representing a destination to which the vehicle is finally to reach and generates an outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced on the basis of the received present positional information and destination information;
a guidance data converting section (22, 23) that converts the outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route; and
a producing section (24, 25, 26, 27, 28, 16, 17) that compares at least one of the outgoing-route producing positional information and the returning-route producing positional information with the present positional information of the vehicle detected by the present position detecting section and produces at least one of the returning-route producing information and the outgoing-route producing information when a difference in distance representing a result of comparison between the compared positional information is equal to or shorter than a predetermined value.

18. A route guidance method for an automotive vehicle (1), comprising:
detecting (12) a present positional information of the vehicle;
inputting (21) a destination information;
converting (22, 23) an outgoing-route guidance data constituted by an outgoing-route producing information to produce an outgoing-route along which the vehicle is to travel from the detected present positional information of the vehicle to the inputted destination information and an outgoing-route producing positional information representing a point of place at which the outgoing-route producing information is produced into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route;
comparing (24, 25, 26, 27, 28, 16, 17) at least one of the outgoing-route producing positional information and the returning-route producing positional information with the detected present positional information of the vehicle; and
producing (24, 25, 26, 27, 28, 16, 17) at least one of the returning-route producing information and the outgoing-route producing information when a difference in distance representing a result of comparison between the compared positional information is equal to or shorter than a predetermined value.

19. A route guidance method for an automotive vehicle (1), comprising:
receiving (2) a present positional information representing a present position of the vehicle and a destination information representing a destination to which the vehicle is finally to reach;
generating (2) an outgoing-route guidance data on the basis of the received present positional information and destination information;
transmitting (13) the detected present positional information of the vehicle and the inputted destination information thereof to generate the outgoing-route guidance data;
receiving (13) the outgoing-route guidance data constituted by an outgoing-route producing information to produce an outgoing-route along which the vehicle is to travel from the present positional information of the vehicle detected by the vehicular position detecting section to the destination information inputted through the destination input section and an outgoing-route producing positional information representing a point of place at which the outgoing-route producing information is produced;
converting (22, 23) the received outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route;
comparing (24, 25, 26, 27, 28, 16, 17) at least one of the outgoing-route producing positional information and the returning-route producing positional information with the detected present positional information of the vehicle; and
producing (24, 25, 26, 27, 28, 16, 17) at least one of the returning-route producing information and the outgoing-route producing information when a difference in distance representing a result of comparison between the compared positional information is equal to or shorter than a predetermined value.

20. A route guidance method for an automotive vehicle (1), comprising:
detecting (12) a present positional information of the vehicle;
inputting (21) a destination information;
receiving (130) the present positional information representing a present position of the vehicle and a destination information representing a destination to which the vehicle is finally to reach;
generating (130) an outgoing-route guidance data constituted by an outgoing-route producing information to produce an outgoing-route along which the vehicle is to travel from the detected present to produce the returning-route along which the vehicle is to travel to return from the destination to a start point of place information of the vehicle to the inputted destination information and an outgoing-route producing positional information representing a point of place at which the outgoing-route producing information is produced on the basis of the received present positional information and destination information;
converting (22, 23) the outgoing-route guidance data into a returning-route guidance data constituted by a returning-route producing information to produce the returning-route along which the vehicle is to travel to return from the destination to a start point of place and a returning-route producing positional information representing another point of place at which the returning-route producing information is produced, with a point of place indicated by the destination information as the start point of place of the returning-route and a point of place indicated by the present positional information as the destination of the returning-route;
comparing (24, 25, 26, 27, 28, 16, 17) at least one of the outgoing-route producing positional information and the returning-route producing positional information with the present positional information of the vehicle; and
producing (24, 25, 26, 27, 28, 16, 17) at least one of the returning-route producing information and the outgoing-route producing information when a difference in distance representing a result of comparison between the compared positional information is equal to or shorter than a predetermined value.
